(19) **Europäisches Patentamt**
**European Patent Office**
**Office européen des brevets**

(11) **EP 2 831 870 B1**

(12) **EUROPEAN PATENT SPECIFICATION**

(45) Date of publication and mention
of the grant of the patent:
**08.05.2019 Bulletin 2019/19**

(51) Int Cl.:
***G06F 3/0485*** *(2013.01)*     ***G06F 3/0488*** *(2013.01)*
*G01C 21/36* *(2006.01)*     *G09G 5/34* *(2006.01)*

(21) Application number: **13769362.8**

(86) International application number:
**PCT/US2013/033802**

(22) Date of filing: **26.03.2013**

(87) International publication number:
**WO 2013/148625 (03.10.2013 Gazette 2013/40)**

(54) **METHOD AND SYSTEM FOR CONTROLLING IMAGERY PANNING BASED ON DISPLAYED CONTENT**

VERFAHREN UND SYSTEM ZUR STEUERUNG EINES BILDSCHWENKS AUF BASIS ANGEZEIGTER INHALTE

PROCÉDÉ ET SYSTÈME PERMETTANT DE CONTRÔLER UN PANORAMIQUE D'IMAGERIE D'APRÈS UN CONTENU AFFICHÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2012 US 201213432042**

(43) Date of publication of application:
**04.02.2015 Bulletin 2015/06**

(73) Proprietor: **Google LLC**
**Mountain View, CA 94043 (US)**

(72) Inventors:
• **JONES, Jonah**
**Darlinghurst, New South Wales 2010 (AU)**
• **SEEFELD, Bernhard**
**New York, NY 10003 (US)**

(74) Representative: **Suckling, Andrew Michael**
**Marks & Clerk LLP**
**Fletcher House**
**The Oxford Science Park**
**Heatley Road**
**Oxford OX4 4GE (GB)**

(56) References cited:
**EP-A2- 0 881 563**     **EP-A2- 2 348 394**
**WO-A1-2012/001637**     **JP-A- 2010 243 670**
**JP-A- 2011 127 949**     **US-A1- 2005 177 305**
**US-A1- 2007 209 017**     **US-A1- 2008 291 217**
**US-A1- 2009 256 840**     **US-A1- 2010 251 166**
**US-A1- 2011 208 724**     **US-A1- 2012 019 452**
**US-B2- 7 907 124**

**Description**

FIELD

The present disclosure relates generally to navigating imagery, and more particularly to imagery panning based on content displayed in the imagery.

BACKGROUND

Improvements in computer processing power and content delivery have led to the development of interactive imagery, such as interactive geographic imagery. Services such as Google Maps are capable of displaying various images of a geographic location from a variety of perspectives. Such services can include a user interface that includes a viewport displaying at least a portion of geographic imagery, such as map imagery, satellite imagery, oblique view imagery, and street level imagery, of a geographic area from various angles and/or viewpoints.

User interfaces for interactive imagery systems typically include one or more navigation tools that allow a user to pan, tilt, rotate, and zoom the imagery in the viewport. For instance, a user can pan the imagery in the viewport by interacting with the imagery and dragging the imagery in various directions. Certain interactive systems allow a user to navigate the imagery by "throwing" the imagery in the viewport. As one example, a user interacting with a touch screen interface can throw the imagery in the viewport using a finger swipe. This causes the imagery to pan in the general direction of the finger swipe. As another example, a user can throw the imagery in the viewport by selecting the imagery and dragging a user manipulable cursor using a mouse or touchpad.

When the user throws the imagery in the viewport, the imagery pans in the general direction of the throw at a pan rate that typically decays over time. The view of the imagery typically lands or stops panning at an arbitrary and unpredictable location. This requires the user to perform further manipulations to the view of the imagery to obtain a desired view, frustrating the interactive viewing experience of the user. To counteract this unpredictability, certain interact systems have made the lowered the inertia of the imagery pan in response to the user input. This is undesirable as it removes the ability to easily and quickly pan the imagery long distances in the viewport through a simple gesture.

US2005177305 proposes a display method and apparatus for a navigation system, which is capable of preventing blank scroll of a display screen when there are no visible objects within a display range when the screen is scrolled and immediately jumping to the screen where a visible object exists.

EP2348394 proposes a map display system comprising a map information storing unit that stores map information including information on a facility icon, a display unit that displays a map image including the facility icon on a screen of the display unit, a position detecting unit that detects a touch position on the screen of the display unit, and a scroll control unit to perform follow scrolling of the map image is scrolled following movement of the touch position and to perform inertial scrolling in which the map image is scrolled on the basis of a moving direction and a moving speed of the touch position when touching the screen is released.

JP2011127949 proposes a scroll control means for receiving a scroll instruction of a map image that changes a scroll speed of the map image when a POI (Point Of Interest) is displayed within a prescribed display area of the display device during scroll of the map image.

US2007209017 proposes a scrolling speed controlling system that includes a personal computer, a human interface device, an executable application, and a scroll speed adapter component. A scroll speed adapter component makes use of predetermined areas of interest to the user to control the scroll speed in such a way as to slow down scrolling as the area of interest approaches and speed up scrolling as the area of interest moves away.

US2010251166 proposes an information browse apparatus that includes an attractive data detector, a display unit, a scroll processor, and a data clipper. The attractive data detector detects attractive data and a location of the attractive data. The display unit displays partial data of spread data on a display area corresponding to a screen size of a display screen. The scroll processor determines a direction and speed of scrolling in response to a scroll instruction, determines a basic updated location of an updated display area in accordance with the direction and speed of scrolling, and determines a corrected updated location in accordance with the location of the attractive data and the basic updated location. The data clipper clips the partial data of the spread data to be displayed on the display unit.

JP2010243670A proposes a map display in which a display is scrolled at a speed that is determined based on the number of points of interest in the display.

US2012019452 proposes selection of input of a touch sensing surface. Contacts on or near a surface are tracked to obtain touch information of the contacts. In some embodiments a finger swipe movement initiates panning of imagery at a pan rate that decreases with time.

EP 0 881 563 proposes a digital map display scrolling method which is for successively scrolling a displayed portion of a digital map as map information in digital form within a display screen, the method comprising the steps of displaying the displayed portion of the digital map at the display screen, shifting a pointer within the displayed portion of the digital map displayed at the display screen, and making an amount by which the pointer positioned at the displayed portion is shifted correspond to the scrolling speed of the displayed portion of the digital map within the display screen.

SUMMARY

Aspects and advantages of the invention will be set forth in part in the following description, or may be obvious from the description, or may be learned through practice of the invention.

According to a first aspect of the present invention, there is provided a method as set out in claim 1. According to a second aspect of the present invention, there is provided a computer-based system as set out in claim 4. According to a third aspect of the present invention, there is provided a computer readable medium as set out in claim 5.

Features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 depicts an exemplary system for displaying imagery according to an exemplary embodiment of the present disclosure;
FIG. 2 depicts an exemplary computing device having a user interface presenting geographic imagery in a viewport according to an exemplary embodiment of the present disclosure;
FIGS. 3A-3D depict an exemplary imagery pan in response to a user input;
0013] FIG. 4 depicts a graphical representation of the pan rate of the imagery pan depicted in FIGS. 3A-3D;
FIG. 5 depicts a flow diagram of an exemplary method according to an exemplary embodiment of the present disclosure;
FIG. 6 depicts a flow diagram of an exemplary method according to an exemplary embodiment of the present disclosure;
FIGS. 7A-7D depict an exemplary image pan in response to a user input according to an exemplary embodiment of the present disclosure;
FIG. 8 depicts a graphical representation of the pan rate of the imagery pan depicted in FIGS.7A-7D;
FIGS. 9A-9D depict an exemplary image pan in response to a user input according to an exemplary embodiment of the present disclosure;
FIG. 10 depicts a graphical representation of the pan rate of the imagery pan depicted in FIGS. 9A-9D;
FIG. 11 depicts a flow diagram according to an exemplary embodiment of the present disclosure; and

FIGS. 12A-12D depict an exemplary imagery pan in response to a user input according to an exemplary embodiment of the present disclosure.

DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to geographic imagery. A user can initiate a pan of the imagery in a viewport presented on a display of a computing device by throwing the imagery in the viewport. For instance, a user can perform a finger swipe on a touch screen interface to throw the imagery in the viewport. After a throw action, the imagery can pan across the viewport at an initial pan rate that decays over time. The initial pan rate can be variable based on the user input. For instance, a faster user gesture, such as a relative fast finger swipe, can result in the initial pan rate being relatively high. A slower user gesture can result in the initial pan rate being relatively slow.

According to aspects of the present disclosure, the initial inertia of the imagery pan is loosened up in response to the throw action such that the imagery pans at a greater pan rate in the viewport upon user interaction with the imagery. The imagery pan can be controlled based on content displayed in the viewport such that the imagery pan is more likely to land at or near predominate features depicted in the viewport, facilitating a user's navigation of the imagery.

In one implementation, an imagery pan in response to a throw action can be controlled or adjusted based on weights assigned to features depicted in the viewport or near the viewport. Predominate features in the imagery can be assigned greater weights than less predominate features in the imagery. For instance, a large city can have a higher weight than a smaller city. A busy neighborhood can have a higher weight than a sparse area. A road through a desert can have a higher weight than an empty section of the desert.

The weights can be assigned to features using any suitable criteria. For instance, the weights can be assigned to features in the imagery based on rankings used to prioritize features for display in the imagery. In addition, the weights can be assigned based on personal information optionally provided by a user, such as favorite locations, most visited locations, most viewed locations, current location of the user, personal preferences, and other settings and/or information provided by the user.

When the imagery is thrown in the viewport, the panning of the imagery in response to the throw is adjusted based on the weights assigned to features displayed in the viewport. In one example, the weights assigned to features can act as "friction" on the imagery, slowing down the imagery pan as the features pass through the viewport. A feature having a higher weight will slow down the imagery pan more than a feature having a low weight. For example, a feature with a relatively high weight can slow down a relatively fast imagery pan and can stop a relatively slow imagery pan. A feature with a relatively low weight may barely affect a relatively fast imagery pan, but could further slow a relatively slow imagery pan.

In another example, the weights assigned to features displayed in the viewport can act as "gravity" on the imagery. In particular, the direction of the imagery pan in response to the throw action by the user can be adjusted based on the weights assigned to features depicted in the imagery. For instance, the direction of the imagery pan can be adjusted such that that imagery pans more towards features with higher weights than features with lower rates.

In this manner, the present disclosure provides for more convenient navigation of imagery when panning imagery in viewports. The loosening of the inertia of the imagery pan allows for convenient panning across large distances or portions of the imagery. By providing for the control of the imagery pan based on content displayed in the viewport, the imagery is more likely to land or pass over features of interest to a user when the user initiates a throw action of the imagery. As a result, the user can experience a more user friendly and convenient navigation experience when interacting with the imagery.

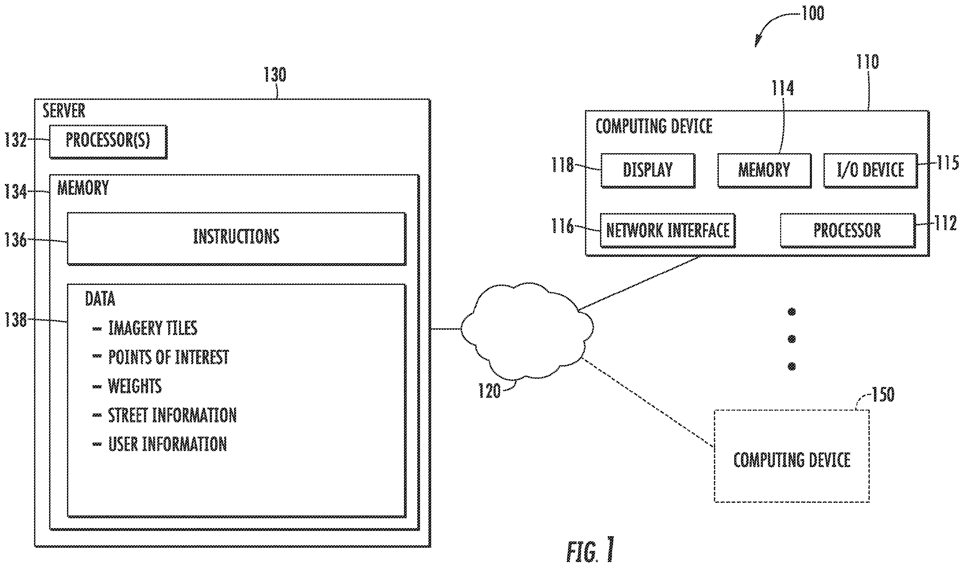

FIG. 1 depicts an exemplary interactive system 100 for displaying imagery according to an exemplary embodiment of the present disclosure. The present disclosure is discussed with reference to geographic imagery, such as map imagery, satellite imagery, oblique view imagery, street level imagery, and other geographic imagery. Those of ordinary skill in the art, using the disclosures provided herein, should understand that the present subject matter is equally applicable for use with any type of imagery, such as the three-dimensional imagery provided in Google Earth, aerial view imagery or other suitable imagery.

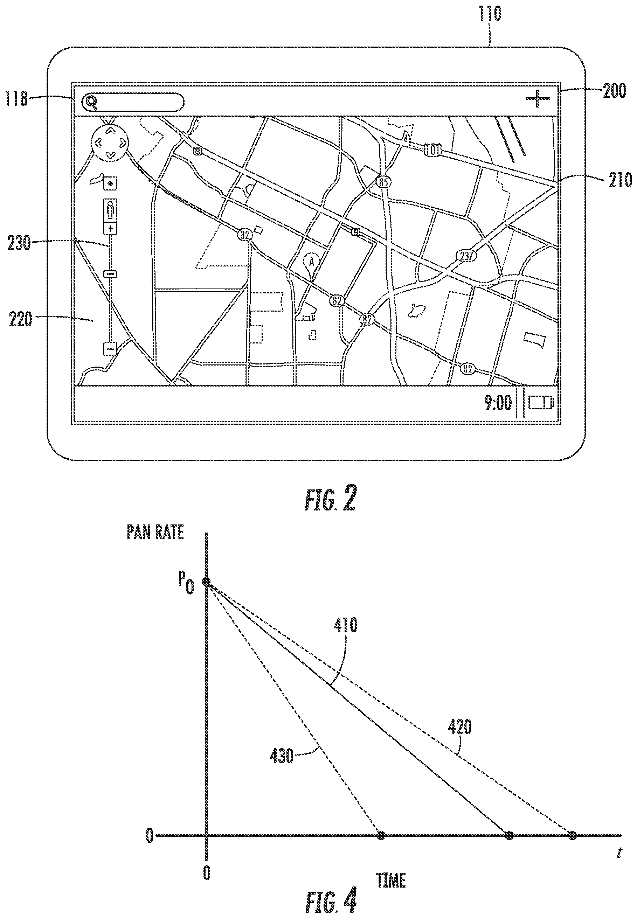

As illustrated, system 100 includes a computing device 110 for displaying geographic imagery to a user. The computing device 110 can take any appropriate form, such as a personal computer, smartphone, desktop, laptop, PDA, tablet, or other computing device. The computing device 110 includes a display 118 for displaying the imagery to a user and appropriate input devices 115 for receiving input from the user. The input devices 115 can include, for instance a touch screen, a touch pad, data entry keys, a mouse, speakers, and/or a microphone suitable for voice recognition. A user can request imagery by interacting with an appropriate user interface presented on the display 118 of computing device 110. The computing device 110 can then receive imagery and associated data and present at least a portion of the imagery through a viewport on any suitable output device, such as through a viewport set forth in a browser presented on the display 118. An exemplary user interface having a viewport for presenting imagery will be discussed with reference to FIG. 2.

Referring still to FIG. 1, the computing device 110 includes a processor(s) 112 and a memory 114. The processor(s) 112 can be any known processing device. Memory 114 can include any suitable computer-readable medium or media, including, but not limited to, RAM, ROM, hard drives, flash drives, or other memory devices. Memory 114 stores information accessible by processor(s) 112, including instructions that can be executed by processor(s) 112. The instructions can be any set of instructions that when executed by the processor(s) 112, cause the processor(s) 112 to provide desired functionality. For instance, the instructions can be software instructions rendered in a computer-readable form. When software is used, any suitable programming, scripting, or other type of language or combinations of languages can be used to implement the teachings contained herein. Alternatively, the instructions can be implemented by hard-wired logic or other circuitry, including, but not limited to application-specific circuits.

The computing device 110 can include a network interface 116 for accessing information over a network 120. The network 120 can include a combination of networks, such as cellular network, WiFi network, LAN, WAN, the Internet, and/or other suitable network and can include any number of wired or wireless communication links. For instance, computing device 110 can communicate through a cellular network using a WAP standard or other appropriate communication protocol. The cellular network could in turn communicate with the Internet, either directly or through another network.

Computing device 110 can communicate with another computing device 130 over network 120. Computing device 130 can be a server, such as a web server, that provides information to a plurality of client computing devices, such as computing devices 110 and 150 over network 120. Computing device 130 receives requests from computing device 110 and locates information to return to computing devices 110 responsive to the request. The computing device 130 can take any applicable form, and can, for instance, include a system that provides mapping services, such as the Google Maps services provided by Google Inc.

Similar to computing device 110, computing device 130 includes a processor(s) 132 and a memory 134. Memory 134 can include instructions 136 for receiving requests for geographic imagery from a remote client device, such as computing device 110, and for providing the requested information to the client device for presentation to the user. Memory 134 can also include or be coupled to various databases 138 containing information for presentation to a user. In addition, computing device 130 can communicate with other databases as needed. The databases can be connected to computing device 130 by a high bandwidth LAN or WAN, or could also be connected to computing device 130 through network 120. The databases, including database 138, can be split up so that they are located in multiple locales.

Database 138 can store store map-related information, at least a portion of which can be transmitted to a client device, such as computing device 110. For instance, database 138 can store map tiles, where each tile is an image of a particular geographic area. Depending on the resolution (e.g. whether the map is zoomed in or out), a single tile can cover a large geographic area in relatively little detail or just a few streets in high detail. The map information is not limited to any particular format. For example, the images can include street maps, satellite images, oblique view images, aerial images, or combinations of these.

The various map tiles are each associated with geographical locations, such that the computing device 130 is capable of selecting, retrieving and transmitting one or more tiles in response to receipt of a geographical location. The locations can be expressed in various ways including but not limited to latitude/longitude positions, street addresses, points of interest on a map, building names, and other data capable of identifying geographic locations.

The database 138 can also include points of interest. A point of interest can be any item that is interesting to one or more users that is associated with a geographical location. For instance, a point of interest can include a landmark, stadium, park, monument, restaurant, business, building, or other suitable point of interest. A point of interest can be added to the database 138 by professional map providers, individual users, or other entities. As will be discussed in more detail below, the database 138 can store weights associated with the points of interest that can be used to control the navigation of imagery in the viewport presented on a computing device, such as computing device 110. The computing device 130 can transmit the weights to a client device along with map tiles and other information during navigation of the imagery, such as during an imagery pan.

The database 138 can also store street information. In addition to street images in the tiles, the street information can include the location of a street relative to a geographic area or other streets. For instance, it can store information indicating whether a traveler can access one street directly from another street. Street information can further include street names where available, and potentially other information, such as distance between intersections and speed limits.

In particular embodiments, the database 138 can include user information that is optionally provided by a user to enhance the user's viewing and navigation experience. Exemplary user information can include favorite locations, most visited locations, current location, preferences, and/or settings provided by the user that can be used to enhance the interactive viewing experience of the user. The user information can be used to determine weights associated with features and/or points of interest such that the weights can be tailored to individual users.

Computing device 130 can provide information, including geographic imagery weights, and other associated information, to computing device 110 over network 120. The information can be provided to computing device 110 in any suitable format. The information can include information in HTML code, XML messages, WAP code, Flash, Java applets, xhtml, plain text, voiceXML, VoxML, VXML, or other suitable format. The computing device 110 can display the information to the user in any suitable format. In one embodiment, the information can be displayed within a browser, such as Google Chrome or other suitable browser.

FIG. 2 depicts an exemplary computing device 110 having a user interface 200, such as a browser, presented on a display 118. The computing device 110 of FIG. 2 is illustrated as a tablet computing device. However, those of ordinary skill in the art, using the disclosures provided herein, should understand that computing device 110 can be any suitable computing device. User interface 200 includes a viewport 210 that displays geographic imagery 220. The geographic imagery 220 depicted in FIG. 2 comprises street map imagery. Geographic imagery 220 can also include satellite imagery, oblique view imagery, aerial imagery, three-dimensional imagery, or other suitable imagery.

A user can interact with geographic imagery 220 by interacting with various navigation tools 230. For instance, a user can pan, tilt, rotate and/or zoom the imagery 220 using navigation tools 230 to obtain different views of the geographic imagery. According to aspects of the present disclosure, a user can pan the imagery (i.e. move the imagery in the viewport in different directions) by "throwing" imagery in the viewport. For instance, a user can initiate a throw of the imagery by swiping a finger across a touch screen. This will cause the imagery to pan across the viewport in the general direction of the finger swipe at an initial speed or pan rate that is based on the speed of the finger swipe. The pan rate of the imagery pan will decay over time until the imagery comes to rest in the viewport. Other user interactions can initiate a throw of the imagery in the viewport. For instance, a user can initiate a throw by dragging a mouse across the display, by dragging a finger across a touchpad, or through other suitable user interactions.

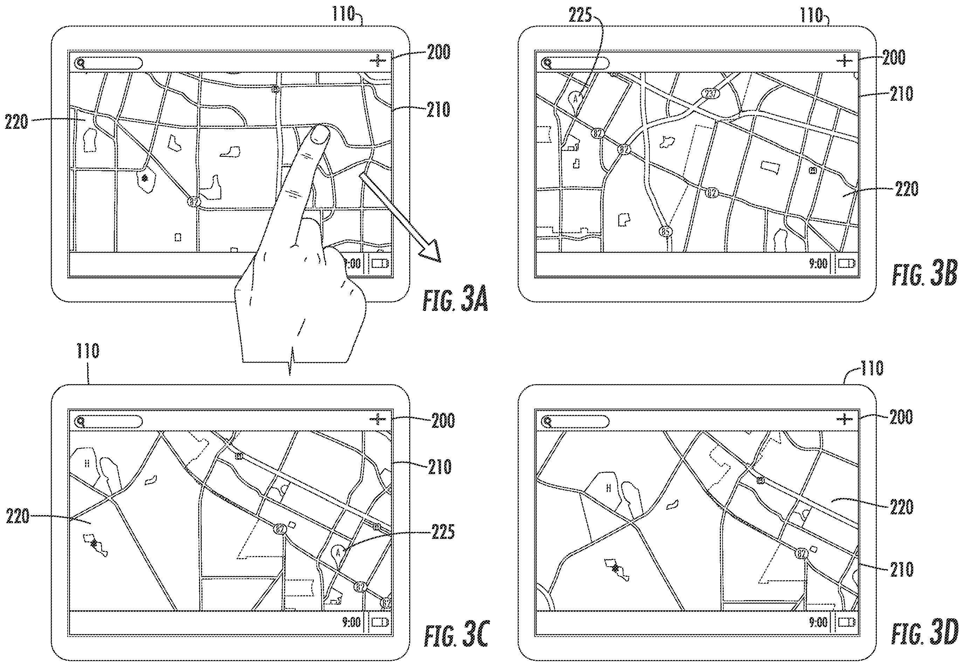

FIGS. 3A-3D depict an exemplary imagery pan in a viewport 210 of a user interface 200 in response to a user input throwing the imagery across the viewport 210. As shown in FIG. 3A, the viewport displays geographic imagery 220 at a first location. A user that wishes to view another portion of the geographic imagery 220 can initiate a throw of the imagery by a finger swipe or other suitable gesture. This causes the imagery to pan in the general direction of the finger swipe such that feature 225 comes into view as shown in FIG. 3B. Feature 225 can be any suitable object, item, information, or other feature depicted in the imagery 220. For example, feature 225 can be a city, town, neighborhood, street, body of water, building, monument, address, stadium, arena, or other suitable point of interest. The imagery 220 will continue to pan across the viewport 210 in response to the user input as shown in FIG. 3C until the imagery 220 comes to rest as shown in FIG. 3D.

FIG. 4 provides a graphical representation of the pan rate associated with the imagery pan illustrated in FIGS. 3A-3D. In particular, FIG. 4 plots the pan rate (speed) of the imagery pan as a function of time in response to a user input initiating a throw of the imagery. The initial pan rate $P_0$ can be dependent on the user gesture, such as the speed of a finger swipe. For instance, a faster finger swipe can result in a higher initial pan rate. A slower finger swipe can result in a lower initial pan rate. As shown by curve 410, the pan rate steadily declines over time until the pan rate is zero where the imagery comes to rest. While curve 410 represents a linear decline in the pan rate, other suitable relationships can be used. For instance, the pan rate can decline exponentially until the imagery comes to rest.

The slope of curve 410 represents the rate of decline in the pan rate of the imagery and provides an indication of the "inertia" of the throw. The "inertia" of the throw dictates how long it takes for the imagery to come to rest after a throw action. For instance, the inertia of the throw can be loosened up (i.e. increased) such that it takes longer for the imagery to come to rest after the user input throwing the imagery. This is illustrated by curve 420. The inertia of the throw can also be tightened (i.e. decreased) such that the imagery comes to rest in a shorter period of time as illustrated by curve 430. The inertia of a throw can be adjusted by settings associated with an interactive imagery system, such as settings input by a user.

Referring back to FIG. 3D, the imagery has been thrown such that the feature 225 has passed out of view in the viewport 210. Accordingly, a user desirous of viewing feature 225 will have to further navigate the imagery 220 such that the feature 225 comes back into view. This can disrupt the interactive navigation experience of the user and lead to user frustration. According to aspects of the present disclosure, the imagery pan in response to a user input is controlled based on content displayed in the viewport such that it is more likely that the imagery comes to rest with relevant features displayed in the viewport.

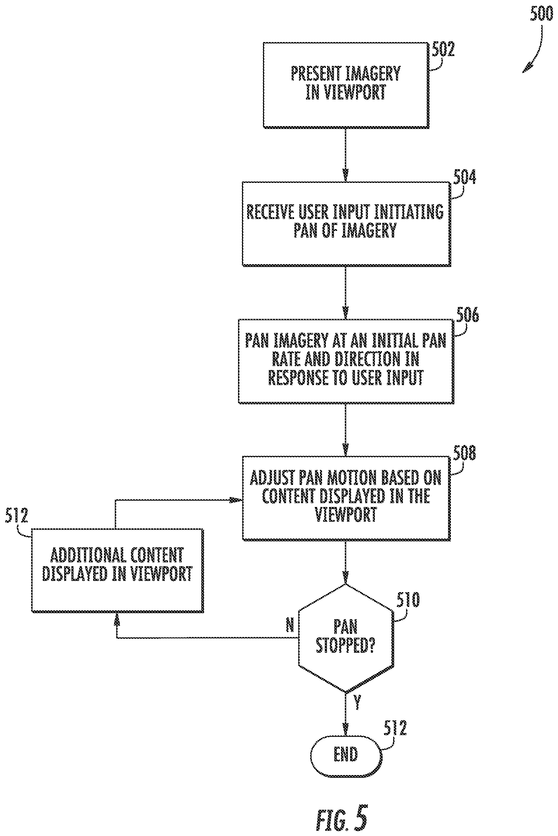

FIG. 5 depicts an exemplary computer-implemented method (500) for controlling the pan of imagery in response to user input according to an exemplary embodiment of the present disclosure. The exemplary method (500) can be implemented using any computing device, such as the computing device 110 of FIG. 1. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods can be omitted, rearranged, combined and/or adapted in various ways.

At (502), the method includes presenting imagery in the viewport. For instance, the computing device 110 can present geographic imagery, such as map imagery, satellite imagery, aerial imagery, and/or oblique view imagery, in viewport 210 of a user interface 200 presented on a display 118 of computing device 110. At (504), the method includes receiving a user input initiating a pan of the imagery in the viewport. The user input can be any suitable input from a user initiating a pan of the imagery. For instance, a user input, such as a finger swipe or other gesture, can be received to throw the imagery in the viewport. At (506), the method pans the imagery in response to the user input at an initial pan rate and direction. For instance, the processor 112 of the computing device 110 can initiate a pan of the imagery in the viewport 210 in response to user input provided via a suitable input device 115. The initial pan rate and direction of the imagery pan can be based on the user input. For example, in the case of a finger swipe, the initial pan rate and direction of the imagery pan can be based on the speed and direction of the finger swipe.

At (508), the method adjusts the motion of the imagery in the viewport based on content displayed in or near the viewport. For instance, the processor 112 of the computing device 110 can adjust characteristics of the imagery pan, such as pan rate and pan direction, based on one or more features displayed in or near the viewport 210. The features depicted in the viewport can affect the motion of the imagery pan in various ways. In one example, features depicted in the viewport can act as "friction" on the imagery pan, slowing the pan rate of the imagery pan as the imagery pans across the viewport. The friction applied by features depicted in the viewport facilitate navigation of the imagery by making the imagery more likely to land in an area where relevant features are presented to a user after a imagery throw. The features can also act as "gravity" on the imagery pan, adjusting the direction of the imagery pan such that more predominate features of the imagery are depicted in the viewport after the imagery pan comes to rest.

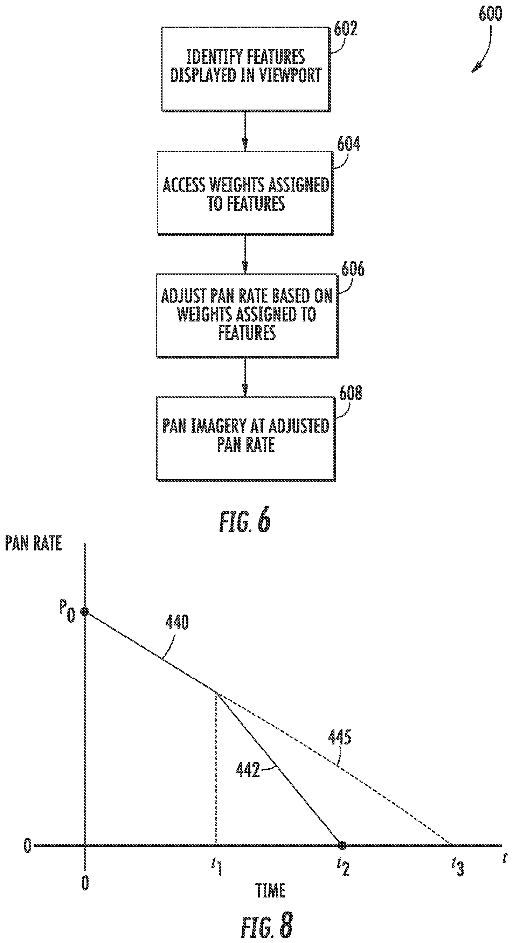

FIG. 6 depicts one exemplary method (600) for adjusting the pan motion based on content displayed in the viewport according to an exemplary embodiment of the present disclosure. The method of FIG.6 can be implemented by any computing device, such as by the processor 112 of the computing device 110 of FIG. 1. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods can be omitted, rearranged, combined and/or adapted in various ways.

At (602), the method identifies features displayed in the viewport. For instance, the processor 112 of computing device 110 can identify features that are currently displayed in the viewport 210. The number of features displayed in the viewport can be dependent on the zoom level of the imagery. Imagery at a high zoom level will have fewer features than imagery at a lower zoom level. The features depicted in the viewport will affect the motion of the imagery as the imagery pans across the viewport.

At (604), the method includes accessing weights assigned to the features depicted in the viewport. For instance, the computing device 110 can send a request to computing device 130 for imagery to be displayed during an imagery pan. Upon receipt of this request, the computing device 130 can provide, via a network, geographic imagery for display during the imagery pan as well as weights associated with features depicted in the viewport. Alternatively, the computing device 110 could access weights previously downloaded from the computing device 130 and stored in a local memory. The characteristics of the imagery pan can be adjusted, for instance by the processor 112 of the computing device 110, based on the weights associated with the features depicted in the viewport.

The weights can be assigned to the features using any suitable criteria. For instance, the weights can be assigned based on information associated with the feature, such as population, size, popularity, number of searches associated with the feature, amount of information associated with the feature, current events associated with the feature, or other suitable criteria. In one embodiment, the weights can be assigned to the features using priority rankings used to prioritize features for display in the imagery. As is known, a different number of features in the imagery can be displayed depending on the zoom level of the imagery. Features of relatively higher importance are typically displayed in the imagery before features of relatively low importance. The weights assigned to the features can be based on similar criteria to determining rankings for prioritizing these features for display. For instance, the weights can be based on population, popularity, size, number of search queries related to the feature, or other suitable criteria.

The weights assigned to particular features can also be based on user information optionally provided by a user, such as favorite locations, most visited locations, most viewed locations, settings, preferences or other information optionally provided by a user. This information can be used to personalize the navigation experience of a particular user such that features of interest to a particular user will have a greater effect on the motion of the imagery as it pans across the viewport.

At (606), the method includes adjusting the pan rate based on the weights assigned to features depicted in the viewport. For example, the processor 112 can adjust the pan rate of the imagery in the viewport 210 presented on the display 118 of computing device 110 based on features depicted in the imagery. The method includes slowing down the pan rate based on the weights of features depicted in the viewport. As an example, the method can include summing all of the weights depicted in the viewport and adjusting the pan rate of the imagery pan in proportion to the total weight of all features.

As another example, the method can include summing all of the weights within a predefined perimeter or radius about the center of the viewport and adjusting the pan rate of the imagery pan in proportion to the total weight of these features. The perimeter of radius can be predefined and in certain cases can be set to encompass features that are not displayed in the viewport. In this manner, the present disclosure can adjust the motion of an imagery pan on features that are near or adjacent to the viewport, but are not displayed in the viewport.

In a particular embodiment, the pan rate can be adjusted based on the following:

$$P_1 = P_0 - \mu I$$

where $P_1$ is the adjusted pan rate; $P_0$ is the initial pan rate; $\mu$ is a weighting factor determined as a function of the weights assigned to features in the viewport (such as the sum of all weights associated with features depicted in the viewport) and I is associated with the natural decay rate of the imagery pan in response to the throw. The weighting factor $\mu$ can be determined in any suitable manner. For instance, the weighting factor $\mu$ can be determined as a function of the sum of all weights assigned to features depicted in the viewport. Alternatively, the weighting factor $\mu$ can be determined as function of all weights within a predefined radius or perimeter about the center of the viewport.

As illustrated from the above formula, the weighting factor $\mu$ increases the deceleration rate of the imagery pan in proportion to the weights of features depicted in the viewport. The greater the weight of the features depicted in the imagery, the stronger the frictional force slowing down the imagery pan. In this manner, the features act as "friction" on the imagery pan, slowing down the imagery.

At (608) the method includes panning the imagery at the adjusted pan rate. For instance, after determining an adjusted pan rate based on the features depicted in the viewport, the processor 112 of the computing device 110 can pan the imagery at the adjusted pan rate such that the motion of the imagery across the viewport during the imagery pan is altered. This process can then repeat itself based on additional content displayed in the imagery as the imagery pans across the viewport until the imagery comes to rest.

For example, referring back to FIG. 5, the method determines at (510) whether the imagery pan has comes to a rest. If so, the method terminates as shown at (512). If the imagery has not come to a rest, the imagery pan continues across the viewport such that additional content is displayed in the viewport (512). For instance, the computing device 110 can send a request to the computing device 130 for additional imagery to be displayed in the viewport during the imagery pan. Upon receipt of this request, the computing device 130 can provide the additional imagery along with associated weights to the computing device 110. As shown in FIG. 5, the pan motion can then be further adjusted (508) based on the additional content until the imagery pan eventually comes to a rest.

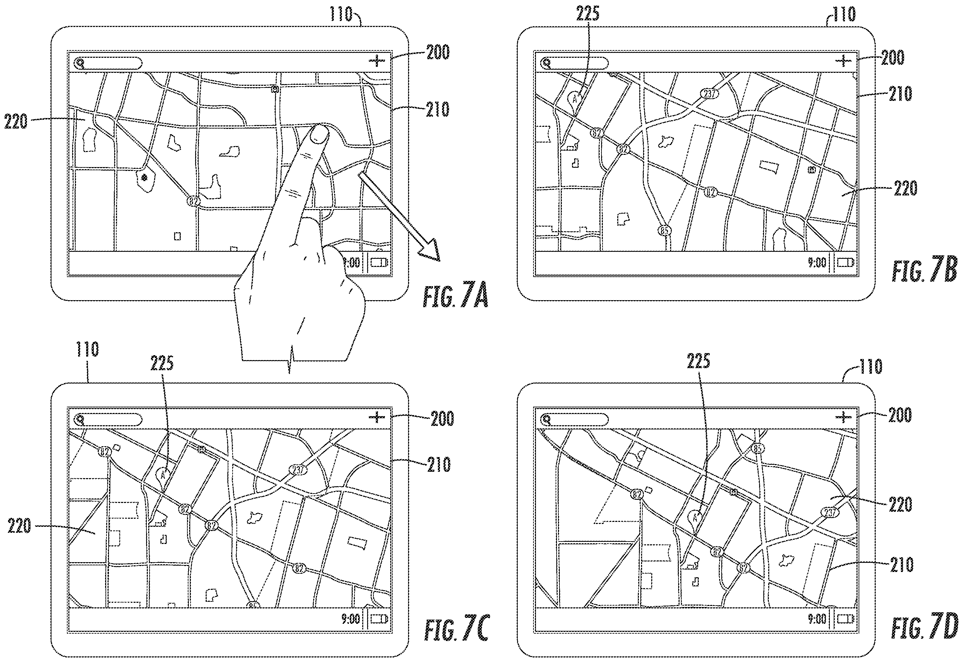

FIGS. 7A-7D depict an exemplary imagery pan in a viewport 210 of a user interface 200 in response to a user input throwing the imagery across the viewport 210 according to an exemplary embodiment of the present disclosure. As shown in FIG. 7A, the viewport displays geographic imagery 220 at a first location. A user that wishes to view another portion of the geographic imagery 220 can initiate a throw of the imagery by a finger swipe or other suitable gesture. This causes the imagery to pan in the general direction of the finger swipe at an initial pan rate such that feature 225 comes into view as shown in FIG. 7B.

As discussed above, feature 225 can be any suitable object, item, information, or other feature depicted in the imagery 220. The present illustration will be discussed with reference to a single feature 225 for illustrative purposes. Those of ordinary skill in the art, using the disclosures provided herein, will understand that many features can be depicted in the viewport during the imagery pan and that each of these features can affect the motion of the imagery in a manner similar to the single feature 225.

Once the feature 225 comes into view as shown in FIG. 7B, the pan rate of the imagery pan will slow down at a greater rate as illustrated in FIGS. 7C and 7D until the imagery 220 comes to rest. As shown in FIG. 7D, the feature 225 is depicted at or near the center of viewport 210 when the imagery 220 comes to rest. This is because the weight associated with feature 225 has slowed down the imagery pan, making it more likely for the imagery pan to come to rest with feature 225 displayed in the viewport 210.

FIG. 8 graphically depicts the pan rate associated with the imagery pan illustrated in FIGS. 7A-7D. In particular, FIG. 8 plots the pan rate of the imagery pan as a function of time in response to a user input initiating a throw of the imagery. As shown by curve 440, the pan rate steadily declines from the initial pan rate $P_0$ over time until the feature 225 comes into view at time $t_1$. At this instant, the rate at which the pan rate decelerates is increased as a result of the feature 225 being depicted in the viewport. This is illustrated by curve 442 which shows the pan rate more rapidly declining until the pan rate reaches zero at about time $t_2$.

As shown by curve 445, had the feature 225 not affected the motion of the imagery pan, the imagery pan would have come to rest at a later time $t_3$ which could have resulted in the feature 225 being out of view in the viewport. However, because the feature 225 affects the motion of the viewport, the feature 225 comes to rest at or near the center of the viewport (as shown in FIG. 7D), improving the navigation experience of the user.

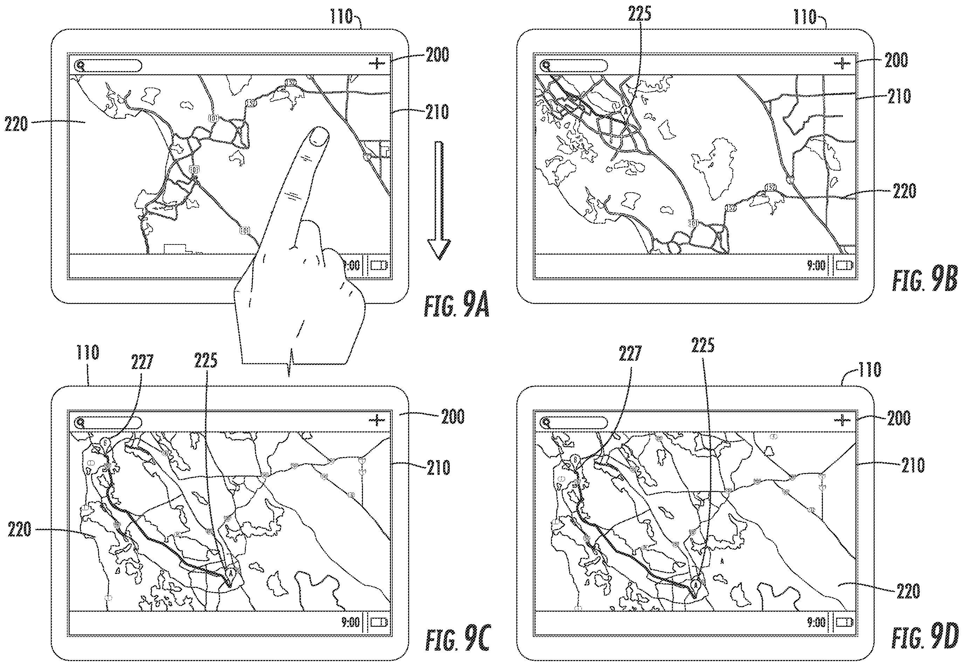

FIGS. 9A-9D illustrate another exemplary imagery pan in a viewport 210 of a user interface 200 in response to a user input throwing the imagery according to an exemplary embodiment of the present disclosure. As shown in FIG. 9A, the viewport displays geographic imagery 220 at a first location. A user that wishes to view another portion of the geographic imagery 220 can initiate a throw of the imagery by a finger swipe or other suitable gesture. This causes the imagery to pan in the general direction of the finger swipe at an initial pan rate such that feature 225 comes into view as shown in FIG. 9B. The feature 225 will act as friction on the imagery pan, slowing the pan rate of the imagery pan. As the imagery continues to pan as shown in FIG. 9C, an additional feature 227 comes into view. The additional feature 227 will also affect the imagery pan, further slowing the imagery pan until the imagery comes to rest at FIG. 9D. While FIGS. 9A-9D are discussed with reference to two features 225 and 227 for illustration purposes, those of ordinary skill in the art, using the disclosures provided herein, will understand that many features can be depicted in the viewport during the imagery pan and that each of these features can affect the motion of the imagery in a manner similar to the features 225 and 227.

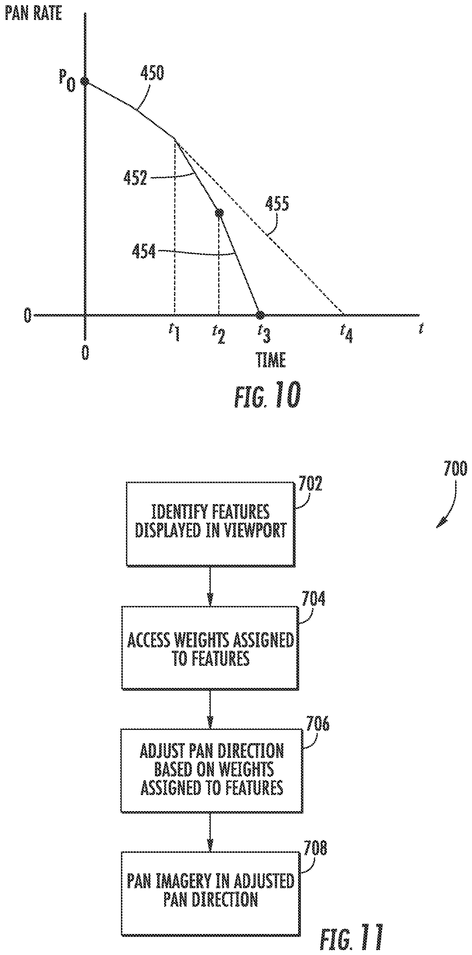

This imagery pan of FIGS. 9A-9D is graphically depicted in FIG. 10, which plots the pan rate of the imagery as a function of time. As shown by curve 450, the imagery pans at an initial pan rate $P_0$ that naturally decays over time. At time $t_1$, the feature 225 comes into view and causes the pan rate to decelerate at a greater rate as illustrated by curve 452. At time $t_2$, the additional feature 227 comes into view causing a further deceleration of the pan rate as illustrated by curve 454. The cumulative effect of the features 225 and 227 on the imagery pan cause the imagery to come to rest quicker when compared to the natural decay of the pan rate shown by curve 455. As a result, the imagery is more likely to come to rest with both features 225 and 227 displayed in the viewport, improving the navigation experience of the user.

Because the imagery 220 in FIGS. 9A-9D is zoomed out relative to the imagery 220 depicted in FIGS. 7A-7D, the imagery 220 of FIGS. 9A-9D will display more features when compared to imagery 220 of FIGS. 7A-7D. These additional features can have a greater cumulative effect on the motion of the imagery during the imagery pan. In certain cases this can be undesirable. To offset the display of additional features at different zoom levels, the weights assigned to the features that are used to adjust the motion of the imagery pan can be reduced or increased based on the zoom level of the imagery. Alternatively, the initial pan rate of the imagery pan can be set higher or lower depending on the zoom level to achieve desired imagery pan characteristics. For instance, a user input initiating a throw of the imagery at a lower zoom level (with more features displayed) can cause a higher initial pan rate when compared to a user input initiating a throw of the imagery at a higher zoom level (less features depicted).

The above examples have been discussed with reference to features acting as "friction" on the imagery pan. According to additional aspects of the present disclosure, the features can also act as "gravity" on the imagery pan and thus affect not only the pan rate, but the pan direction of the imagery pan. For instance, FIG. 11 depicts an exemplary method (700) for adjusting the motion of the imagery pan based on content displayed in the viewport according to an exemplary embodiment of the present disclosure. The method of FIG. 1 lean be implemented by any computing device, such as by the processor 112 of the computing device 110 of FIG. 1. In addition, although FIG. 11 depicts steps performed in a particular order for purposes of illustration and discussion, the methods discussed herein are not limited to any particular order or arrangement. One skilled in the art, using the disclosures provided herein, will appreciate that various steps of the methods can be omitted, rearranged, combined and/or adapted in various ways.

At (702) the method identifies features displayed in the viewport.. For instance, the processor 112 of computing device 110 can identify features that are currently displayed in the viewport 210. At (704) the method access weights assigned to the features. As discussed above, the features displayed in the viewport can be assigned weights based on any suitable criteria, such as rankings used to prioritize features for display and/or information optionally provided by a user.

The method then adjusts the pan direction of the imagery pan based on weights assigned to the features (706). For example, the processor 112 can adjust the pan direction of the imagery in the viewport 210 presented on the display 118 of computing device 110 based on weights associated with features depicted in the imagery. The initial pan direction can be adjusted such that a significant feature, is more likely to be displayed in the center of the imagery when the imagery comes to rest.

In one example embodiment, the pan direction can be adjusted as a function of both weight assigned to a particular feature and a distance and direction of the feature from the center of the viewport. For example, each feature can be assigned a vector having a value determined as a function of the weight assigned to the feature and the distance of the feature from the center of the viewport. The direction associated with the vector can be determined as a function of the direction of the feature relative to the center of the viewport. The adjusted pan direction can be determined by calculating the vector sum of all features depicted in the viewport.

In this example, features with higher weights will affect the pan direction of the imagery more than features with lower weights. In addition, features that are closer to the center of the viewport will have a greater effect on the motion of the imagery pan than features further away from the center of the viewport. Moreover, because the adjusted pan direction is determined as a vector sum, the adjusted pan direction can also take into account the direction of the features depicted in the viewport relative to the center of the viewport.

Referring still to FIG. 11 at (708), the imagery is panned in the adjusted pan direction. For instance, after determining an adjusted pan direction based on the features depicted in the viewport, the processor 112 of the computing device 110 can pan the imagery in the adjusted pan direction such that the motion of the imagery across the viewport during the imagery pan is altered. The process can then repeat itself based on additional content displayed in the imagery until the imagery comes to rest.

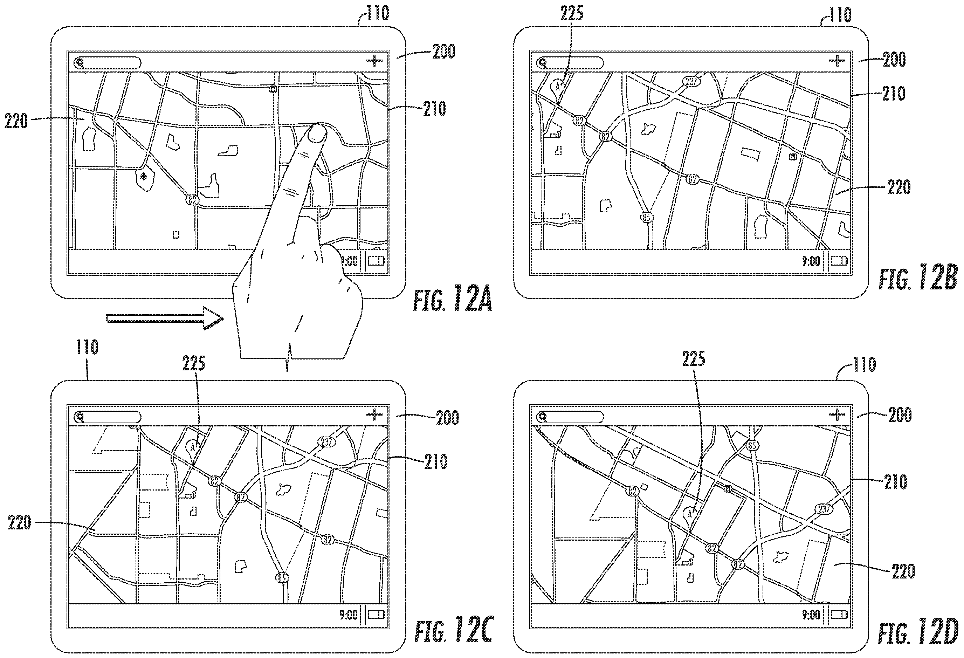

FIGS. 12A-12D depict an exemplary image pan in accordance with the exemplary method (700) of FIG. 11. The imagery pan in FIGS. 12a-12d will be discussed with reference to a single feature 225 for illustration purposes. Those of ordinary skill in the art, using the disclosures provided herein, will understand that many features can be depicted in the viewport during the imagery pan and that each of these features can affect the motion of the imagery in a manner similar to the single feature 225.

As shown in FIG. 12A, the viewport displays geographic imagery 220 at a first location. A user that wishes to view another portion of the geographic imagery 220 can initiate a throw of the imagery by a finger swipe or other suitable gesture. This causes the imagery to pan generally to the right in an initial pan direction such that feature 225 comes into view as shown in FIG. 12B. The feature 225 will affect the direction of the imagery pan such that it is more likely that the feature 225 will be displayed at the center of the imagery when the imagery comes to rest. For example, FIG. 12C shows that the direction of the imagery pan has been slightly altered such that feature 225 has moved slightly to the right and downward. FIG. 12D illustrates that the direction of the imagery pans has been further altered such that feature 225 is displayed at or near the center of viewport 210.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A computer-implemented method for navigating geographic imagery depicting one or more features, each feature having an assigned weight, the method, comprising:

   presenting (502) a viewport (210) in a user interface (200) of a computing device, the viewport (210) displaying at least a portion of geographic imagery;
   receiving (504) a user input initiating an imagery pan of the imagery (220) displayed in the viewport (210);
   in response to the user input, panning (506) the geographic imagery (220) at an initial pan rate and pan direction, wherein the initial pan direction depends on the user input;
   and adjusting (508) characteristics of the imagery pan based on one or more features (225) in the portion of the geographic imagery passing through the viewport (210);
   wherein the method further comprises, after the user input, identifying (602) one or more features depicted in the portion of the geographic imagery passing through the viewport (210), accessing (604) a respective weight assigned to each identified feature, and determining a sum of the accessed weights;
   **characterized in that**:

      - the initial pan rate depends on the user input;
      - the pan rate decreasing over time from the initial pan rate according to a deceleration rate until a feature passes through the viewport; and
      - adjusting (508) characteristics of the geographic imagery pan comprises increasing the deceleration rate of the geographic imagery pan in proportion to the sum of the accessed weights.

2. The computer-implemented method of claim 1, further comprising the step of determining a vector for each identified feature by:

      - determining the vector value as a function of the weight assigned to the identified feature and the distance of the identified feature from the center of the viewport (210), and
      - determining a vector direction as a function of the direction of the identified feature from the center of the viewport;

   wherein the method further comprises determining a vector sum of the vectors associated with the one or more identified features; and

wherein adjusting (508) characteristics of the geographic imagery pan further comprises adjusting the pan direction based on the vector sum.

3. The computer-implemented method of claim 1, comprising the step of assigning weights to features displayed in the viewport (210) based at least in part on rankings used to prioritize the features for display in the geographic imagery (220).

4. A computer-based system for displaying geographic imagery, the system comprising a processing device (110), a display (118) and a network interface (116), the processing device and the display configured to perform a method according to any one of the preceding claims.

5. A computer-readable medium (114) storing computer-readable instructions that when executed by a processing device (110) connected to a display (118) cause the processing device (110) and the display (118) to perform a method according to any one of claims 1 to 3.

## Patentansprüche

1. Computerimplementiertes Verfahren zum Navigieren von geographischen Bilddaten, die ein oder mehrere Merkmale abbilden, wobei jedes Merkmal ein zugewiesenes Gewicht hat, Folgendes umfassend:

   Präsentieren (502) eines Ansichtsfensters (210) in einer Benutzerschnittstelle (200) einer Computereinrichtung, wobei das Ansichtsfenster (210) mindestens einen Teil der geographischen Bilddaten darstellt;
   Empfangen (504) einer Benutzereingabe, die eine Panoramaeinstellung der Bilddaten (220) initiiert, die im Ansichtsfenster (210) dargestellt sind;
   als Antwort auf die Benutzereingabe das Mitziehen (506) der geographischen Bilddaten (220) mit einer anfänglichen Panoramarate und Panoramarichtung, worin die anfängliche Panoramarichtung von der Benutzereingabe abhängt; und das Anpassen (508) von Charakteristiken des Bilddatenpanoramas auf der Basis von einem oder mehreren Merkmalen (225) im Anteil der geographischen Bilddaten, die durch das Ansichtsfenster (210) laufen;
   worin das Verfahren außerdem umfasst, dass nach der Benutzereingabe ein oder mehrere Merkmale abgebildet (602) werden, die im Teil der geographischen Bilddaten identifiziert werden, der durch das Ansichtsfenster (210) läuft, wobei auf ein jeweiliges Gewicht zugegriffen wird (604), das jedem, identifizierten Merkmal zugewiesen ist und eine Summe der zugegriffenen Gewichte bestimmt wird;
**dadurch gekennzeichnet, dass**:

- die anfängliche Panoramarate von der Benutzereingabe abhängt;
- die Panoramarate zeitlich von der anfänglichen Panoramarate gemäß einer Verlangsamungsrate abnimmt, bis ein Merkmal durch das Ansichtsfenster läuft; und
- das Anpassen (508) von Charakteristiken des geographischen Bilddatenpanoramas das Erhöhen der Verlangsamungsrate des geographischen Bilddatenpanoramas proportional zur Summe der zugegriffenen Gewichte umfasst.

2. Computerimplementiertes Verfahren nach Anspruch 1, außerdem den Schritt des Bestimmens eines Vektors für jedes identifizierte Merkmal umfassend durch:

- Bestimmen des Vektorwerts als eine Funktion des Gewichts, das dem identifizierten Merkmal zugewiesen wird, und der Entfernung des identifizierten Merkmals vom Zentrum des Ansichtsfensters (210), und
- Bestimmen einer Vektorrichtung als eine Funktion der Richtung des identifizierten Merkmals vom Zentrum des Ansichtsfensters,

worin das Verfahren außerdem das Bestimmen einer Vektorsumme der Vektoren umfasst, die mit dem einen oder den mehreren identifizierten Merkmalen assoziiert sind; und
worin das Anpassen (508) von Charakteristiken des geographischen Bilddatenpanoramas außerdem das Anpassen der Panoramarichtung auf der Basis der Vektorsumme umfasst.

3. Computerimplementiertes Verfahren nach Anspruch 1, den Schritt des Zuweisens von Gewichten an Merkmale umfassend, die im Ansichtsfenster (210) angezeigt werden, mindestens zum Teil auf Rankings basierend, die zum Priorisieren der Merkmale zum Display in den geographischen Bilddaten (220) verwendet werden.

4. Computerbasiertes System zum Anzeigen geographischer Bilddaten, wobei das System eine Verarbeitungseinrichtung (110), ein Display (118) und eine Netzschnittstelle (116) umfasst, wobei die Verarbeitungseinrichtung und das Display dazu konfiguriert sind, ein Verfahren nach einem der vorhergehenden Ansprüche auszuführen.

5. Computerlesbares Medium (114), das computerlesbare Anweisungen speichert, die, wenn von einer Verarbeitungseinrichtung (110) ausgeführt, die an einen Display (118) angeschlossen ist, die Verarbeitungseinrichtung (110) und das Display (118) veranlasst, ein Verfahren nach einem der Ansprüche 1 bis 3 auszuführen.

**Revendications**

1. Procédé mis en oeuvre par informatique pour naviguer sur une imagerie géographique qui représente une ou plusieurs caractéristique(s), chaque caractéristique présentant un poids attribué, le procédé comprenant :

la présentation (502) d'une fenêtre d'affichage (210) dans une interface utilisateur (200) d'un dispositif informatique, la fenêtre d'affichage (210) affichant au moins une section d'imagerie géographique ;
la réception (504) d'une entrée d'utilisateur qui initie un panoramique d'imagerie de l'imagerie (220) qui est affichée dans la fenêtre d'affichage (210) ;
en réponse à l'entrée d'utilisateur, la réalisation d'un panoramique (506) de l'imagerie géographique (220) selon une vitesse de panoramique et une direction de panoramique initiales, dans lequel la direction de panoramique initiale dépend de l'entrée d'utilisateur ; et
le réglage (508) de caractéristiques du panoramique d'imagerie sur la base d'une ou de plusieurs caractéristique(s) (225) dans la section d'imagerie géographique qui passe au travers de la fenêtre d'affichage (210) ;
dans lequel le procédé comprend en outre, après l'entrée d'utilisateur, l'identification (602) d'une ou de plusieurs caractéristique(s) qui est/sont représentée(s) dans la section de l'imagerie géographique qui passe au travers de la fenêtre d'affichage (210), l'accès (604) à un poids respectif qui est attribué à chaque caractéristique identifiée et la détermination d'une somme des poids accédés ;
**caractérisé en ce que** :

- la vitesse de panoramique initiale dépend de l'entrée d'utilisateur ;
- la vitesse de panoramique diminue au fil de l'écoulement du temps par rapport à la vitesse de panoramique initiale en fonction d'une vitesse de décélération jusqu'à ce qu'une caractéristique passe au travers de la fenêtre d'affichage ; et
- le réglage (508) de caractéristiques du panoramique d'imagerie géographique comprend l'augmentation de la vitesse de décélération du panoramique d'imagerie géographique en proportion de la somme des poids accédés.

2. Procédé mis en oeuvre par ordinateur selon la revendication 1, comprenant en outre l'étape de détermination d'un vecteur pour chaque caractéristique identifiée au moyen des actions qui suivent :

 - la détermination de la valeur du vecteur en fonction du poids qui est attribué à la caractéristique identifiée et de la distance de la caractéristique identifiée par rapport au centre de la fenêtre d'affichage (210) ; et
 - la détermination d'une direction du vecteur en fonction de la direction de la caractéristique identifiée par rapport au centre de la fenêtre d'affichage ;

 dans lequel le procédé comprend en outre la détermination d'une somme vectorielle des vecteurs qui sont associés aux une ou plusieurs caractéristiques identifiées; et
 dans lequel le réglage (508) de caractéristiques du panoramique d'imagerie géographique comprend en outre le réglage de la direction de panoramique sur la base de la somme vectorielle.

3. Procédé mis en oeuvre par ordinateur selon la revendication 1, comprenant l'étape d'attribution de poids à des caractéristiques qui sont affichées dans la fenêtre d'affichage (210) sur la base au moins en partie de classements qui sont utilisés pour prioriser les caractéristiques pour leur affichage dans l'imagerie géographique (220).

4. Système basé sur ordinateur pour afficher une imagerie géographique, le système comprenant un dispositif de traitement (110), un affichage (118) et une interface de réseau (116), le dispositif de traitement et l'affichage étant configurés de manière à ce qu'ils réalisent un procédé selon l'une quelconque des revendications qui précèdent.

5. Support lisible par ordinateur (114) qui stocke des instructions lisibles par ordinateur qui, lorsqu'elles sont exécutées par un dispositif de traitement (110) qui est connecté à un affichage (118), forcent le dispositif de traitement (110) et l'affichage (118) à réaliser un procédé selon l'une quelconque des revendications 1 à 3.

FIG. 1

FIG. 2

FIG. 4

EP 2 831 870 B1

FIG. 3B

FIG. 3D

FIG. 3A

FIG. 3C

15

500

502
PRESENT IMAGERY
IN VIEWPORT

504
RECEIVE USER INPUT INITIATING
PAN OF IMAGERY

506
PAN IMAGERY AT AN INITIAL PAN
RATE AND DIRECTION IN
RESPONSE TO USER INPUT

508
ADJUST PAN MOTION BASED ON
CONTENT DISPLAYED IN THE
VIEWPORT

512
ADDITIONAL CONTENT
DISPLAYED IN VIEWPORT

510
PAN
STOPPED?

N

Y

512
END

FIG. 5

FIG. 6

FIG. 8

EP 2 831 870 B1

FIG. 7A

FIG. 7B

FIG. 7C

FIG. 7D

18

FIG. 9A

FIG. 9B

FIG. 9C

FIG. 9D

PAN RATE

$P_0$

450

452

455

454

$t_1$ $t_2$ $t_3$ $t_4$ $t$

0

TIME

0

*FIG. 10*

700

| 702 |
| IDENTIFY FEATURES DISPLAYED IN VIEWPORT |

| 704 |
| ACCESS WEIGHTS ASSIGNED TO FEATURES |

| 706 |
| ADJUST PAN DIRECTION BASED ON WEIGHTS ASSIGNED TO FEATURES |

| 708 |
| PAN IMAGERY IN ADJUSTED PAN DIRECTION |

*FIG. 11*

FIG. 12A

FIG. 12B

FIG. 12C

FIG. 12D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005177305 A
- EP 2348394 A
- JP 2011127949 B
- US 2007209017 A
- US 2010251166 A
- JP 2010243670 A
- US 2012019452 A
- EP 0881563 A